# EUROPEAN PATENT SPECIFICATION

(11) **EP 1 518 785 B1**
(45) Date of publication and mention of the grant of the patent: **25.03.2009**
(21) Application number: 04022572.4
(22) Date of filing: 22.09.2004
(51) Int. Cl.: B62K 23/04

(54) **Bicycle shift controller**
Schaltsteuerung für Fahrrad
Contrôleur de changement de vitesse pour vélo

(30) Priority: 24.09.2003 JP 2003330912
(43) Date of publication of application: 30.03.2005
(73) Proprietor: SHIMANO INC., Osaka 590-8577 (JP)
(72) Inventor: Takamoto, Ryuichiro, Osaka (JP); Uno, Koji, Osaka (JP); Fujii, Kazuhiro, Osaka (JP)
(74) Representative: Grosse - Schumacher - Knauer - von Hirschhausen

(56) References cited:
- EP-A2- 1 304 286
- EP-A2- 1 391 376
- EP-A2- 1 400 440
- JP-A- 7 229 909
- JP-A- 9 123 978
- JP-A- 10 159 964
- JP-A- 11 147 495
- US-A1- 2003 071 436
- US-A1- 2003 096 674
- US-A1- 2003 160 420

## Description

### Technical Field

The present invention relates to a bicycle shift controller, and in particular to a bicycle shift controller for shift control of a bicycle shifter having a plurality of gear speeds, and able to be upshifted or downshifted by an actuator.

### Background Art

US 2003/071436 discloses a bicycle shift controller having the features of the preamble of claim 1.

Bicycles equipped with shifters having a plurality of gears are known. Shifters include external shift mechanisms and internal shin mechanisms. An external shin mechanism comprises, for example, a small gear having a plurality of sprockets, mounted on the rear wheel, and a derailleur for switching the chain among the sprocket; an internal shift mechanism has an internal shift hub housed inside the rear wheel. The shifter is connected by a shift cable to a shift lever on the handlebar or other location. With a bicycle equipped with a shifter of this kind, a gear speed appropriate for riding conditions can be selected by manual operation of the shift lever.

In many instances, the shift lever is situated close to the brake lever, thus making it necessary to simultaneously operate the brake lever and the shift lever when slowing down, making the shift operation difficult to perform. Accordingly, there have been developed shift controllers that automatically switch gear speed depending on the riding condition of the bicycle (for example, velocity or crank rotation speed). Conventionally, bicycle velocity is calculated by mounting a magnet on the bicycle wheel and sensing one pulse per revolution using a reed switch, calculating from the interval between pulses and the diameter of the wheel. In the shift controller, there are established two threshold values, namely, an upshift threshold value and a downshift threshold value, depending on bicycle gear speed. Here, the upshift threshold value is a value slightly higher than the downshift threshold value of the next highest gear speed. The shift controller performs control by upshifting when sensed velocity exceeds the upshift threshold value, and downshifting when subsequent to upshifting velocity goes below the downshift velocity threshold value. In this way, by controlling shift timing by means of different velocity threshold values for upshifting and downshifting for each single gear speed, the phenomenon of chattering, which occurs with frequent shifting, may be prevented.

Where velocity is sensed at a relatively low frequency of about once per rotation of the wheel, shift timing is controlled at different speeds for upshifting and downshifting, making it easy to prevent chattering. However, where the frequency of sensing velocity per rotation of the wheel is increased, for example, by disposing a plurality of magnets on the wheel in the rotation direction, there is a risk that velocity will be sensed unnecessarily frequently. Specifically, when crank rotation speed is uneven, such as when climbing an uphill stretch, it may occur that for a very brief time, velocity momentarily fluctuates close to the upshift threshold value, resulting in gear upshift which is not intended by the rider, followed by downshifting immediately thereafter. Such continuous shift operations require frequently changing pedaling force in order to maintain that velocity, posing the risk of conflicting with the rider's pedaling rhythm and of unstable travel of the bicycle.

There has also been developed a technique wherein if even a single result among a plurality of sensor results is not above the upshift threshold value, upshifting will not occur. In the conventional shift controller, once riding condition sensor results exceed the upshift threshold value for the current gear speed, a decision is made as to whether, riding condition sensor results exceed the upshift threshold value until a predetermined time interval has elapsed, and if riding condition sensor results exceed the upshift threshold value, shifting is controlled so as to shift gear speed to a higher speed. Also, in the conventional shift controller, once sensed riding conditions exceed the upshift threshold value, upshifting is not performed immediately; rather, if a decision is made that sensor results fail to exceed the upshift threshold value even once during a predetermined time interval, current gear speed is maintained, without performing upshifting. Only when riding conditions exceed the upshift threshold value for a predetermined time interval is the actuator is controlled so as to shift gear speed to a higher speed. Accordingly, even if riding conditions are sensed frequently, shift operations to higher speeds do not readily occur, so that upshifts unintended by the rider can be reduced.

### Disclosure of the Invention

### Problem the Invention Is Intended to Solve

In the conventional arrangement described above, upshifting is not performed unless all sensor results within a predetermined time interval exceed the upshift threshold value, whereby frequent upshifting may be prevented. However, if, in the event of descending a slope on a sidewalk at a parking lot exit, accelerating on an uphill stretch by standing up while pedaling, or sudden acceleration on a flat road for example, all of the sensor results within a predetermined time interval exceed the upshift threshold value, an unintended upshift process may occur. Once such an upshift process has occurred, there is a risk that the rider will experience discomfort due to a sharp increase in the effort needed to pedal.

Accordingly, it is an object of present invention to provide a bicycle shift controller for shift control according to riding conditions, wherein unintended upshift during sudden acceleration of the bicycle can be avoided.

### Means for Solving the Problem

The bicycle shift controller pertaining to a first invention herein is a device for shift control of a bicycle shifter having a plurality of gear speeds, and able to be upshifted or downshifted by an actuator depending on a sensed riding condition, the device comprising a threshold value setting portion, a decision portion, a cancellation portion, and a first control portion. The threshold value setting portion sets an upshift threshold value and downshift threshold value for sensed riding condition depending on the plurality of gear speeds. The decision portion decides, once a sensor result of the riding condition exceeds the upshift threshold value for the current gear speed, whether a plurality of subsequent riding condition sensor results also exceed the upshift threshold value. The cancellation portion cancels a decision made up to that point, in the event that, of two sensor results sensed in succession during decision by the decision portion, the latter sensor result changes by a predetermined value or greater toward the upshift end from the former sensor result. The first control portion controls the actuator so as to shift gear speed towards the high speed end, in the event that the decision portion decides that all subsequent sensor results exceed the upshift threshold value.

With this shifter, riding condition sensor results are compared with upshift threshold values on a gear speed-by- gear speed basis. If riding condition sensor results exceed the upshift threshold value for the current gear speed, decisions are made as to whether riding condition sensor results continue to exceed the upshift threshold value for a predetermined number of times or for a predetermined time interval; if it is decided that all successive riding condition sensor results exceed the upshift threshold value, the actuator is controlled so as to shift the gear speed to a higher speed. However, in the event that, of two sensor results sensed during decisions regarding successive sensor results, the latter sensor result changes by a predetermined value or greater toward the upshift end from the former sensor result, the preceding decision is canceled. As a result, the decision portion re-decides regarding riding condition sensor results. Here, if sensed riding condition exceeds upshift threshold value, upshifting does not take place immediately: rather, the current gear speed is maintained without upshifting until it is decided that, for example, none of a succession of riding condition sensor results over a predetermined time interval or predetermined number of iterations fails to be in excess of the upshift threshold value; and if during the decision process a subsequent sensor result changes by a predetermined value or greater toward the upshift end from a preceding sensor result, i.e. there is sudden acceleration, the preceding decision is canceled, and a revised decision is made. Only where, in the absence of sudden acceleration, all of a number of successive riding condition sensor results exceed the upshift threshold value, is the actuator controlled so as to upshift gear speed to a higher speed.

The bicycle shift controller according a second invention herein is a device as set forth in the first invention, wherein this decides whether the upshift threshold value is exceeded a predetermined successive number of times. In this case, since the timing for upshift is determined on the basis of the number of sensing iterations, shift timing can be varied depending on velocity.

The bicycle shift controller according a third invention herein is a device as set forth in the first invention, wherein the decision portion decides whether the upshift threshold value is exceeded for a predetermined continuous time interval. Here, since the timing for upshift is determined on the basis of a sensing time interval, the apparent threshold value can vary with time.

The bicycle shift controller according a fourth invention herein is a device as set forth in any of the first to third inventions, further comprising a second control portion for controlling the actuator so as to immediately shift gear speed towards the low speed end, in the event that riding condition sensor results reach the downshift threshold value for the current gear speed. Here, in the event that riding condition sensor results reach the downshift threshold value for current gear speed, the actuator is controlled so as to immediately shift gear speed towards the low speed end. Thus, there is a rapid shift from a gear speed requiring strong pedaling force to a gear speed requiring smaller pedaling force, thereby reducing the burden on the rider. In particular, in instances that riding conditions can be sensed frequently, downshift response can be improved, and the burden on the rider reduced.

The bicycle shift controller according a fifth invention herein is a device as set forth in any of the first to fourth inventions, wherein the sensed riding condition is bicycle velocity. In this case, since shift control is carried out by sensing velocity, shift control can be carried out according to velocity.

The bicycle shift controller according a sixth invention herein is a device as set forth in the fifth invention, wherein velocity is sensed a plurality of times in the course of one rotation of the wheel. Here, a plurality of velocity signals are obtained in the course of one rotation of the wheel, so that shift control may be exercised more precisely. Unintended shift control is unlikely to occur, notwithstanding the plurality of velocity signals.

The bicycle shift controller according a seventh invention herein is a device as set forth in the sixth invention, wherein velocity is sensed by means of output from an alternating current generator that rotates in tandem with the wheel. In this case, it is possible to sense velocity without disposing a separate sensor or detector for sensing wheel rotation.

The bicycle shift controller according an eighth invention herein is a device as set forth in any of the first to fourth inventions, wherein the sensed riding condition is the rotation speed of the crank of the bicycle. In this case, shift control can be carried out so as to maintain crank rotation speed at a given level, so that the rider can pedal efficiently within a given range of crank rotation speed.

The bicycle shift controller according a ninth invention herein is a device as set forth in any of the first to eighth inventions, wherein the actuator is an electrically operated component disposed on the bicycle shifter and operated by electricity; and the first control portion electrically controls the actuator. Here, since the actuator is an electrically operated component, such as a motor or solenoid, operated by electrical power, electrical control is a simple matter.

### Effects of the Invention

According to the present invention, if sensed riding conditions exceed the upshift threshold value, upshifting is not performed immediately: rather, once a decision is made that even one sensor result fails to exceed the upshift threshold value for a predetermined time interval or predetermined number of times, upshifting is not performed and the current gear speed is maintained; and if during the decision process a subsequent sensor result changes by a predetermined value or greater toward the upshift end from a preceding sensor result, i.e. there is sudden acceleration, the preceding decision is canceled, and a revised decision is made. Only where, in the absence of sudden acceleration, all of a number of successive riding condition sensor results exceed the upshift threshold value for a predetermined time interval or predetermined number of times, is the actuator controlled so as to upshift gear speed to a higher speed. Accordingly, unintended upshifting when the bicycle suddenly accelerates can be avoided.

### Brief Description of the Drawings

- Fig. 1: Side view of a bicycle according to one embodiment of the invention.
- Fig. 2: Perspective view of handlebar portion thereof.
- Fig. 3: Block diagram showing arrangement of control system.
- Fig. 4: Illustration of exemplary threshold values.
- Fig. 5: Flow chart of the main routine of the shift control process.
- Fig. 6: Flow chart of the Auto Shift 1 process.
- Fig. 7: Flow chart of the Manual Shift process.
- Fig. 8A: Graph showing relationship of velocity and gear speed during shift operations in the invention.
- Fig. 8B: Graph showing relationship of velocity and gear speed during shift operations in a conventional example.
- Fig. 9: Illustration of another embodiment, corresponding to Fig. 1.
- Fig. 10: Illustration of another embodiment, corresponding to Fig. 4.

### Best Mode for Carrying Out the Invention

### Constitution

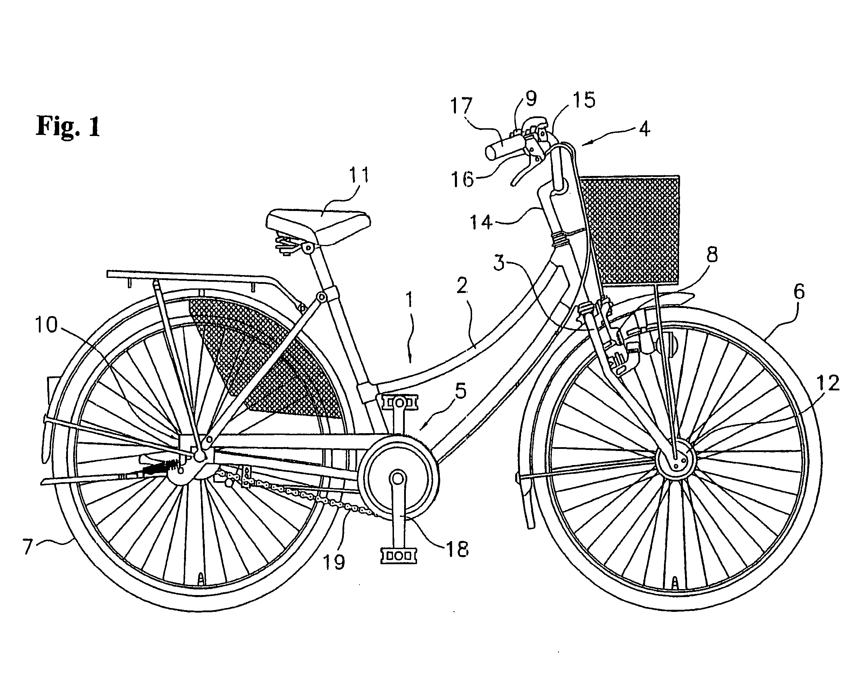

In Fig. 1, by way of a bicycle embodying the invention, there is shown a recreational bicycle comprising frame 1 composed of a double loop-shaped frame body 2 and a front fork 3; a handlebar portion 4; a drive mechanism 5; a front wheel 6 having a generator hub 12 mounted thereon; a rear wheel 7 having a four-speed internal shift hub 10 mounted thereon; front and rear brakes 8 (only the front are shown); and a shift controller 9 for manual control of the internal shift hub 10.

Various components, including a saddle 11 and the handlebar portion 4, are mounted on the frame 1.

Handlebar portion 4 has a handle stem 14, affixed to the upper end of front fork 3; and a handlebar 15 affixed to handle stem 14. A brake lever 16 and grip 17 which constitute a braking device 18 are installed at each end of handlebar 15. A shift controller 9 is installed to the right of brake lever 16.

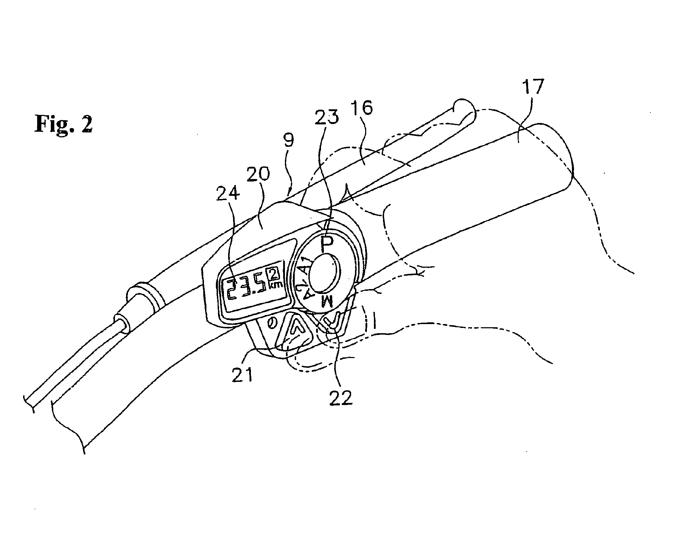

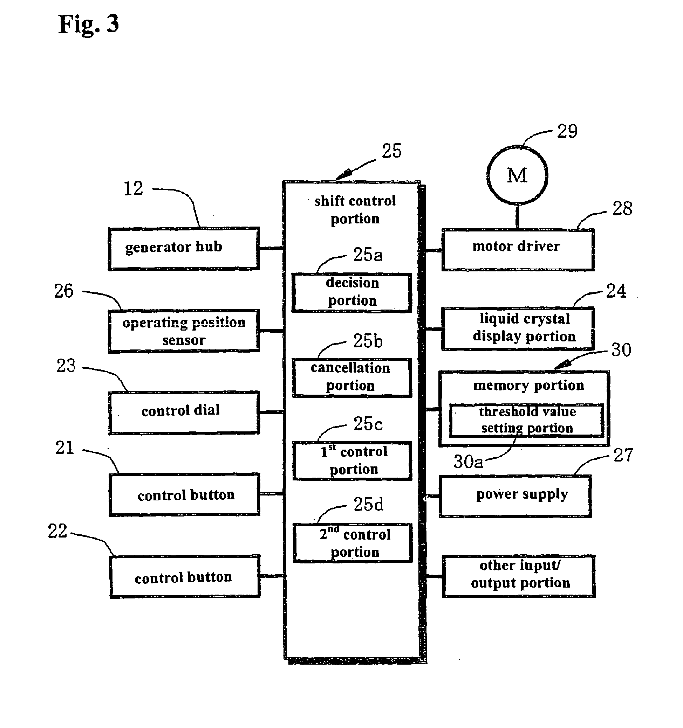

As shown in Fig. 2, shift controller 9 comprises a control panel 20 integrally formed with the right (front) brake lever 16; two control buttons 21, 22 arrayed left to right below the control panel 20; a control dial 23 arranged above control buttons 21, 22; and a liquid crystal display portion 24 arranged to the left of control dial 23. A shift control portion 25 (Fig. 3) for controlling shift operations is housed within control panel 20.

Control buttons 21, 22 are triangular push buttons. The left control button 21 is used to perform shifting from a lower gear speed to a higher gear speed; the right control button 22 is used to perform shifting from a higher gear speed to a lower gear speed. The control dial 23 can be switched among three shift modes and a parking (P) mode, and as such the dial has four stop positions, P, A1, A2 and M. Here, the shift modes are: Auto Shift 1 (A1), Auto Shift 2 (A2), and Manual Shift (M). The Auto Shift 1 and 2 modes are modes for automatically shifting the internal shift hub 10 by means of a velocity signal from the generator hub 12; Auto Shift 1 (A1) mode is a shift mode used mainly when performing automatic shifting on flat terrain, whereas Auto Shift 2 (A2) mode is a shift mode used mainly when performing automatic shifting on uphill stretches. Thus, in Auto Shift 2 (A2) mode, shift timing for upshifting is earlier, and shift timing for downshifting is later, than in Auto Shift 1 (A1) mode. Manual mode is a mode in which the internal shift hub 10 is shifted by operating the control buttons 21, 22. Parking mode is a mode in which the internal shift hub 10 is locked to restrict turning of the rear wheel 7. The liquid crystal display portion 24 displays current travel velocity, as well as displaying selected gear speed when shifting.

Shift control portion 25 is equipped with a microcomputer comprising a CPU, RAM, ROM, and I/O interface. As shown in Fig. 3, shift control portion 25 is connected to generator hub 12, an operating position sensor 26, such as a potentiometer, for sensing operating position of the internal shift hub 10, control dial 23, and control buttons 21, 22. Also connected to shift control portion 25 are a battery power supply 27, a motor driver 28, liquid crystal display portion 24, a memory portion 30, and other input/output portions. Shift control portion 25 comprises a decision portion 25a for deciding whether, once velocity has exceeded the upshift threshold value for the current gear speed, subsequent travel condition sensor results continue to exceed the upshift threshold value; a cancellation portion 25b for canceling a previous decision, in the event that, of two sensor results sensed in succession during decisions by decision portion 25a, the latter sensor result changes by a predetermined value or greater toward the upshift end from the former sensor result; a first control portion 25c for controlling internal shift hub 10 so as to shift gear speed towards the high speed end, in the event that decision portion 25a decides that all subsequent sensor results exceed upshift threshold value; and a second control portion 25d for controlling internal shift hub 10 so as to immediately shift gear speed towards the low speed end, in the event that sensor results exceed the downshift threshold value for current gear speed.

Generator hub 12 consists of a 28-pole alternating current generator, for example, and generates an alternating current signal according to velocity. Shift control portion 25 senses velocity S by means of this alternating current signal from generator hub 12. Thus, velocity S can be sensed 14 times in the course of one rotation of front wheel 6; velocity can be sensed finely by means of a velocity sensing method employing a magnet and reed switch. Accordingly, better real-time shift control can be realized.

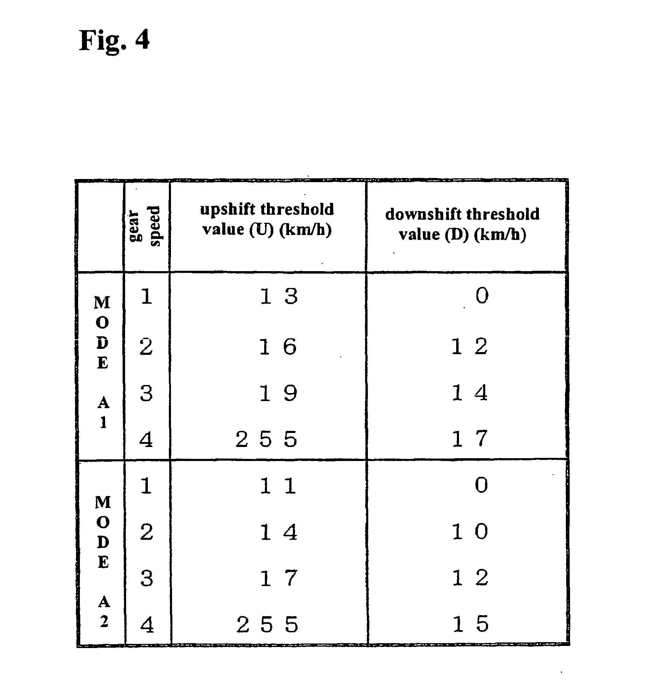

A shift motor 29 (example of an actuator) for driving internal shift hub 10 is connected to motor driver 28. Memory portion 30 is composed of, for example EEPROM or other rewritable, nonvolatile memory, and has stored therein data of various kinds such as a code for use in parking mode, tire diameter for use in sensing velocity, etc. Memory portion 30 also has a threshold value setting portion 30a having established therein relationships between velocity in Auto Shift 1 (A1) mode and in Auto Shift 2 (A2) mode to the various gear speeds, i.e., an upshift threshold value and downshift threshold value for each of the gear speeds (see Fig. 4). In this embodiment, threshold values are preset; however, rider-set threshold values could be made variable instead.

Shift control portion 25 controls the motor 29 according to each mode, and also controls the display on the liquid crystal display portion 24. Specifically, shift control portion 25 comprises a decision portion 25a for deciding whether, once velocity has exceeded the upshift threshold value for the current gear speed, subsequent travel condition sensor results continue to exceed the upshift threshold value; a cancellation portion 25b for canceling a previous decision, in the event that, of two sensor results sensed in succession during decisions by decision portion 25a, the latter sensor result changes by a predetermined value or greater toward the upshift end from the former sensor result; a first control portion 25c for controlling the actuator (i.e. motor 29) so as to shift gear speed towards the high speed end, in the event that decision portion 25a decides that all subsequent sensor results exceed upshift threshold value; and a second control portion 25d for controlling motor 29 so as to immediately shift gear speed towards the low speed end, in the event that sensor results exceed the downshift threshold value for current gear speed.

Examples of velocity threshold values in the Auto Shift 1 (A1) and Auto Shift 2 (A2) modes in Fig. 4 are indicted below.

In Fig. 4, in Auto Shift 1 (A1) mode, upshift threshold values are, for example, 13 km/h (gear 1 -2), 16 km/h (gear 2 -3), and 19 km/h (gear 3 -4). Downshift threshold values are, for example, 12 km/h (gear 2 -1), 14 km/h (gear 3 -2), and 17 km/h (gear 4 -3). In Auto Shift 2 (A2) mode, upshift threshold values are, for example, 11 km/h (gear 1 -2), 14 km/h (gear 2 -3), and 17 km/h (gear 3 -4). Downshift threshold values are, for example, 10 km/h (gear 2 -1), 12 km/h (gear 3 -2), and 15 km/h (gear 4 -3).

Drive mechanism 5 has a gear crank 18 disposed in the lower portion of frame body 2 (hanger portion), a chain 19 engaged on gear crank 18, and internal shift hub 10. Internal shift hub 10 is a four-speed hub having four gear speeds and a lock position; by means of shift motor 29, it may be switched between a total of five positions, namely, four gear speed positions and the lock position. In this lock position, rotation of internal shift hub 10 is restricted.

### Shift Operations

Shifting and locking operations are carried out through mode selection by means of the control dial of shift controller 9 and operation of shift motor 29 by means of shift operations by means of control buttons 21, 22.

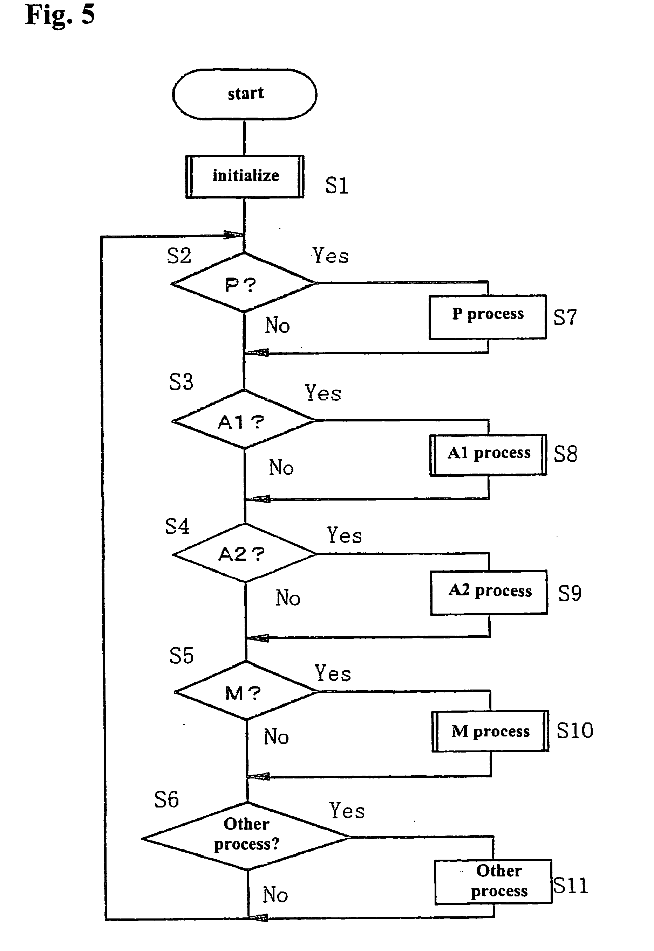

Figs. 5 -7 are flowcharts showing shift control portion 25 control operations.

When the power is turned on, initialization is performed in Step S1. Here, circumference data calculating velocity is set to 26-inch diameter, for example; gear speed is set to second gear (V2), and various counter values (e.g. number of decision iterations n, described later) and flags are reset.

In Step S2, a decision is made as to whether control dial 23 has been set to parking (P) mode. In Step S3, a decision is made as to whether control dial 23 has been set to Auto Shift 1 (A1) mode. In Step S4, a decision is made as to whether control dial 23 has been set to Auto Shift 2 (A2) mode. In Step S5, a decision is made as to whether control dial 23 has been set to Manual (M) mode. In Step S6, a decision is made as to whether another process, such as tire diameter input, has been selected.

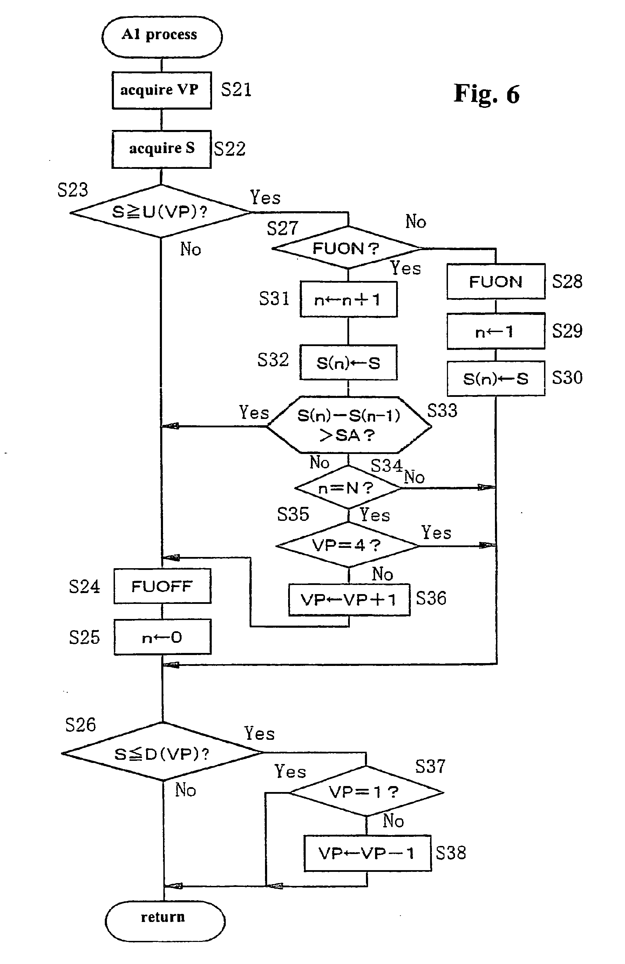

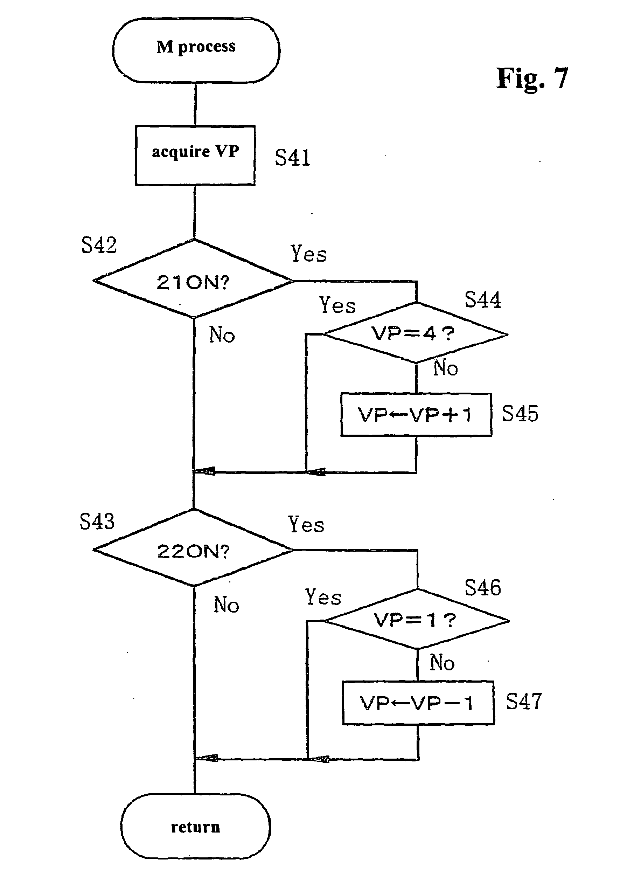

In the event that control dial 23 has been turned to the P position to set it to parking (P) mode, the routine moves from Step S2 to Step S7. In Step S7, a parking (P) process is executed. In the event that control dial 23 has been turned to the A1 position to set it to Auto Shift 1 mode, the routine moves from Step S3 to Step S8. In Step S8, an Auto Shift 1 (A1) process, shown in Fig. 6, is executed. In the event that control dial 23 has been turned to the A2 position to set it to Auto Shift 2 mode, the routine moves from Step S4 to Step S9. In Step S9, an Auto Shift 2 (A2) process similar to the Auto Shift 1 is executed. In the event that control dial 23 has been turned to the M position to set it to Manual mode, the routine moves from Step S5 to Step S10. In Step S10, a Manual Shift (M) process, shown in Fig. 7, is executed. In the event that another process has been selected, the routine moves from Step S6 to Step S11 and executes the selected process.

In the parking (P) process of Step S7, a code registration process to register a code for unlocking the internal shift hub 10, a code input process for inputting and verifying the unlocking code, or other such process is executed according to operation of the control buttons 21, 22.

In the Auto Shift 1 (A1) process of Step S8, operating position VP is set to a gear speed depending on velocity S. In the event of deviation therefrom, shifting is performed in one speed increments to bring them back into approximation. Here, in Step S21 in Fig. 6, the operating position VP of operating position sensor 26 is acquired. In Step S22, current velocity S of the bicycle is acquired by means of the speed signal from generator hub 12. In Step S23, a decision is made as to whether the acquired current velocity S exceeds the upshift threshold value U(VP) corresponding to the operating position VP of operating position sensor 26 as shown in Fig. 4. In Step S24, the upshift flag (FU) is reset (off). Here, upshift flag (FU) is a flag that is reset when velocity S exceeds the upshift threshold value for a gear speed. In Step S25, the number of decision iterations n, which indicates the number of times it has been decided that sensed velocity S successively exceeded the upshift threshold value U(VP), is set to 0. That is, if sensed velocity S does not exceed the upshift threshold value U(VP) for the gear speed (operating position VP), the upshift flag (FU) and number of decision iterations n are reset. In Step S26, a decision is made as to whether acquired current velocity S is below the downshift threshold value D(VP) corresponding to the operating position VP of operating position sensor 26.

In the event that current velocity S exceeds the upshift threshold value U(VP) for current gear speed shown in Fig. 4, the routine moves from Step S23 to Step S27. For example, where gear speed is second gear (VP = 2), the decision will be "Yes" if velocity S is faster than 16 km/h. In Step S27, a decision is made as to whether the upshift flag (FU) is on, i.e., whether velocity S has exceeded upshift threshold value U(VP) at prior timing. If upshift flag FU is not on, the routine moves to Step S28. In Step S28, upshift flag FU is set to on. In Step S29, the number of decision iterations n is set to 1. In Step S30, in order to compare current velocity S with subsequently sensed velocity, sensed velocity S is set to a first velocity value S(n), and the routine moves to Step S26.

In the event that upshift flag FU is already on, that is, velocity S has already exceeded upshift threshold value U(VP) two or more times in succession, the routine moves from Step S27 to Step S231. In Step S31, the number of decision iterations n is incremented by 1. In Step S32, as in Step S30, sensed velocity S is set to *n*-th velocity value S(n). In Step S33, a decision is made as to whether difference between the velocity value S(n) indicating currently sensed velocity S and the velocity value S(n -1) indicating the prior sensed velocity S is greater than a predetermined velocity difference SA. That is, a decision is made as to whether there has been sharp acceleration in two successive sensor results. This predetermined velocity difference SA is preferably a velocity range of 0.3 km -0.8 km, more preferably a velocity range of 0.4 km -0.6 km. It is also possible to make the velocity difference SA variable according to rider preferences. If it is decided that the velocity difference (S(n) - S(n - 1)) is greater than predetermined velocity difference SA, i.e., that there has been sudden acceleration, in order to cancel the previous decision, the routine moves to Step S24 wherein the upshift flag FU is set to off, and then to Step S25 wherein the number of decision iterations n is reset to 0. In this way, the upshift decision is redone from the beginning. If it is decided that the velocity difference is less than predetermined velocity difference SA, the routine moves from Step S33 to Step S34. In Step S34, a decision is made as to whether the number of decision iterations n equals a predetermined number of iterations N (10, for example). This predetermined number of iterations N is a variable for determining the timing for upshift. If predetermined number of iterations N has not yet been reached, the routine moves to Step S26. If number of decision iterations n has reached predetermined number of iterations N, the routine moves to Step S35, and decides whether the gear speed is fourth gear. If in fourth gear, since further upshifting is not possible, no process is performed, and the routine moves to Step S26. However, since the upshift threshold value for fourth gear is 255, which would be inconceivable with normal shifting, it is not normal to pass through this routine. If below fourth gear, the routine moves to Step S36, raises the operating position VP by one to shift up gear speed by one gear, and moves to Step S24. By means of this process, shift motor 29 is operated to upshift internal shift hub 10 by one gear. Upshift flag FU and number of decision iterations n are reset as well.

In the event that current velocity S has fallen below the downshift threshold value D(VP) for the current gear speed shown in Fig. 4, the routine moves from Step S26 to Step S37. For example, where gear speed is second gear (VP = 2), the decision will be "Yes" if velocity S is slower than 12 km/h. In Step S37, a decision is made as to whether the gear speed is first gear. If in first gear, the routine returns to the main routine without performing any process. If in second gear or higher, the routine moves to Step S38, lowers the operating position VP by one to shift down gear speed by one gear, and moves to the main routine. By means of this process, shift motor 29 is operated to downshift internal shift hub 10 by one gear.

The Auto Shift 2 (A2) process of Step S9 differs from the Auto Shift 1 (A1) only in terms of threshold values; the details of the process are generally similar and need not be described here.

In the Manual Shift process of Step S 10, shifting in one gear increments is performed by operating the control buttons 21, 22. In Step S41 of Fig. 7, the operating position VP of operating position sensor 26 is acquired. In Step S42, a decision is made as to whether control button 21 has been operated. In Step S43, a decision is made as to whether control button 22 has been operated. If control button 21 has been operated, the routine moves from Step S42 to Step S44. In Step S44, a decision is made as to whether current operating position VP is fourth gear. If current gear speed is not fourth gear, the routine moves to Step S45, and moves operating position VP one speed higher, to upshift by one gear. If current gear speed is fourth gear, this process is skipped.

If control button 22 has been operated, the routine moves from Step S43 to Step S46. In Step S46, a decision is made as to whether current operating position VP is first gear. If current gear speed is not first gear, the routine moves to Step S47, and moves operating position VP one speed lower, to downshift by one gear. If current gear speed is first gear, this process is skipped.

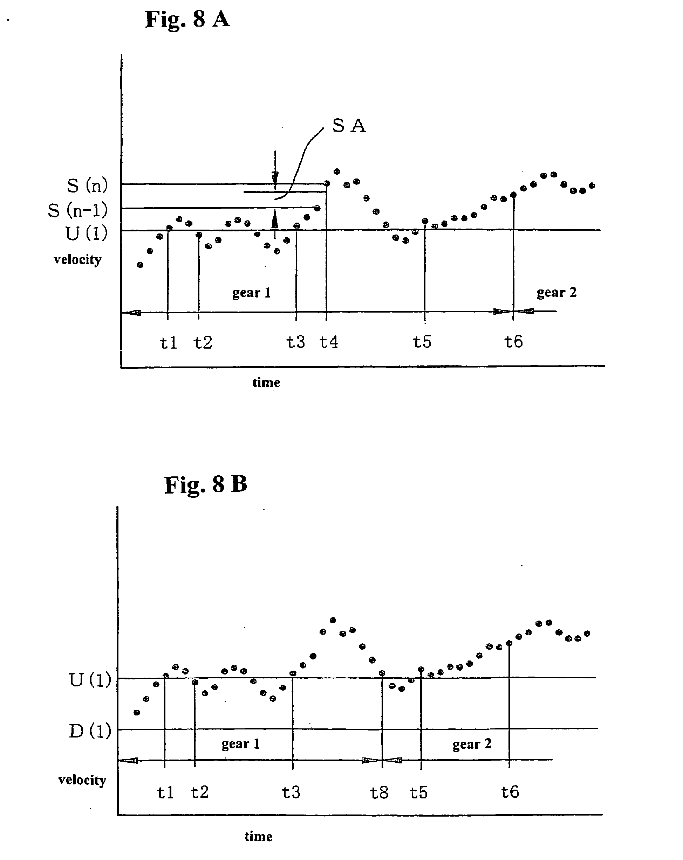

Figs. 8A and 8B show graphs comparing a conventional example and this working example in an automatic shift process. In Figs. 8A and 8B, velocity is plotted on the vertical axis and time is plotted on the horizontal axis. In the Auto Shift 1 process, as shown in Fig. 8A, when, for example, upshift threshold value U(1) (13 km/h, for example) is exceeded while gear speed is first gear, a decision is then made in Step S34 as to whether upshift threshold value U(1) has been exceeded a predetermined number of iterations N (10, for example). In the case of Fig. 8A, it is determined in Step S23 that velocity S has exceeded the upshift threshold value U(VP) at times t1, t3 and t5, whereupon counting commences. However, since at time t2 velocity S is below the upshift threshold value U(VP), the decision in Step S23 is "No", so upshifting is not performed. At time t4, since the difference of velocity value S(n) indicating currently sensed velocity S and velocity value S(n-1) indicating the prior sensed velocity S is greater than predetermined velocity difference SA, the decision in Step S33 is "Yes", so the previous decision is canceled. It is then determined that at time t6, velocity S has exceeded the upshift threshold value U(VP) by a predetermined time for N successive iterations, whereupon the decision in Step S34 is "Yes", and in Step S35 the system shifts up from first gear to second gear.

In the conventional case shown in Fig. 8B, on the other hand, if upshift threshold value U(1) is exceeded successively a predetermined number of times, the system upshifts to second gear. According, at time t2, upshifting is cancelled in the same manner as in the invention, but velocity at time t4 is ignored in decisions made from time t3, so upshifting occurs at time t8. Accordingly, upshifting due to sudden acceleration may occur.

With shift control according to the present invention as described above, in the event of acceleration above a predetermined level in the course of a predetermined number of decision iterations N during upshifting, the decision is canceled, so that upshifting counter to the wishes of the rider may be prevented. Thus, smooth shift operations may be realized. and uncomfortable shift operations reduced.

During downshifting, as soon as sensed velocity S goes below the downshift threshold value (VP), shift motor 29 is controlled so as to shift gear speed to a lower gear. Thus, shift operations shifting to lower gears are carried out immediately once [velocity] goes below the downshift threshold value for the current gear speed, thereby reducing the burden on the rider. In particular, in instances that riding conditions can be sensed frequently by generator hub 29, downshift response can be improved, and the burden on the rider reduced.

### Other Embodiments

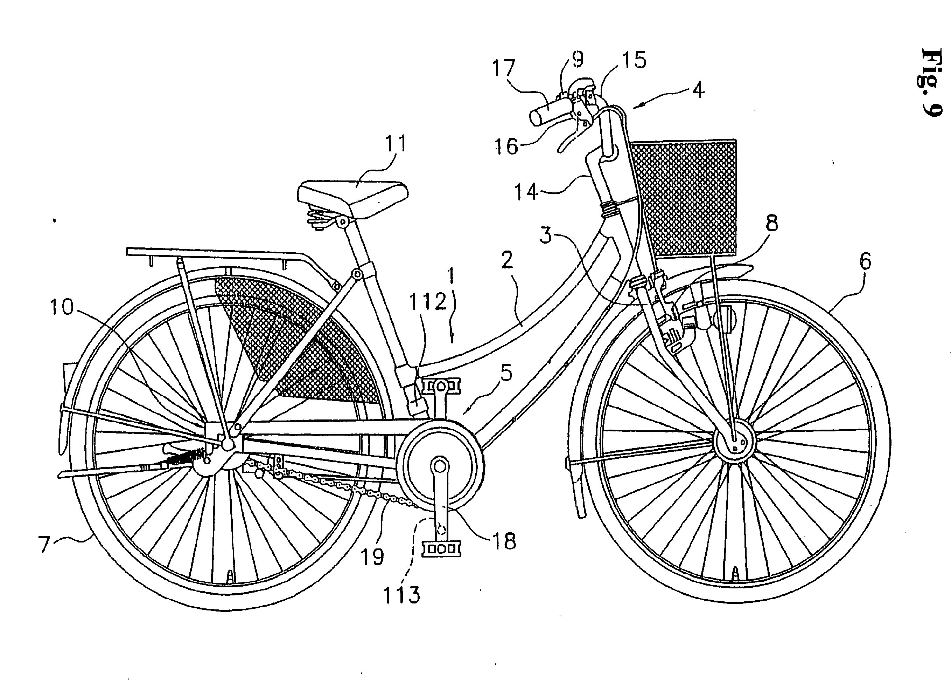

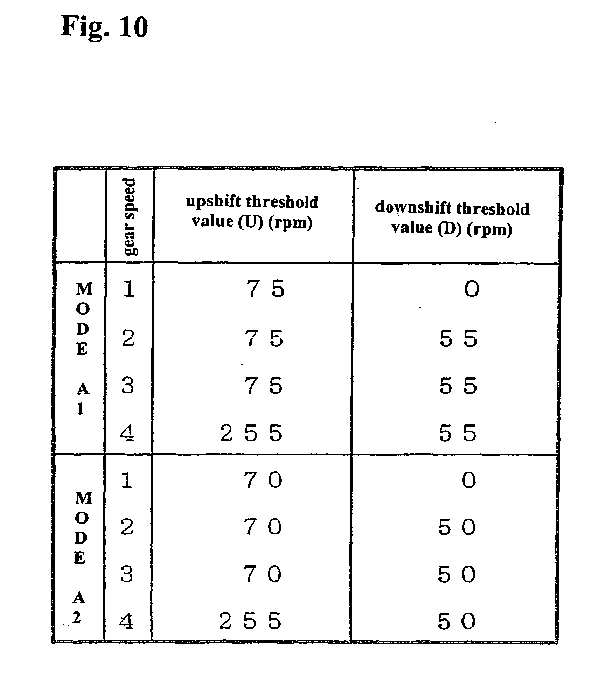

(a) Whereas in the preceding embodiment, an example of an internal shift hub as the shifter was described, the invention may be implemented in an external shift mechanism having a plurality of sprockets and derailleur as well.
(b) Whereas in the preceding embodiment, an example of a shifter actuated by a shift motor was described, the invention may be implemented for controlling a shifter actuated by means of a solenoid or electrical, hydraulic, or pneumatic cylinder or other such actuator.
(c) Whereas in the preceding embodiment velocity was used as the riding condition, crank rotation speed could be used instead. In this case, as shown in Fig. 9, a detector 113, such as a magnet, may be installed on the gear crank 18 of the bicycle, and a rotation sensor 112, such as a reed switch, installed on the bicycle frame 2 to sense crank rotation speed. Alternatively, as shown in Fig. 10, an upper limit and lower limit for crank rotation speed depending on gear speed could be set as threshold values. In Fig. 10, the same values are set for each gear speed, but these could be different instead. In automatic shift mode analogous to the operation shown in Fig. 6, if crank rotation speed exceeds the upshift threshold value, a decision is made as to whether it has exceeded same successively for a predetermined number of iterations N, and if it has fallen below even once, or if the difference between current sensed rotation speed and previous sensed rotation speed exceeds a predetermined level, the decision not to upshift is made.
(d) In the preceding embodiment, upshifting is performed in the event that current velocity or crank rotati>on speed successively exceeds the upshift threshold value U(VP); however, instead, and arrangement whereby upshifting is performed in the event that current velocity or crank rotation speed continuously exceeds the upshift threshold value U(VP) for a predetermined time interval T1. If during the decision process, the difference with sensed velocity or crank rotation speed exceeds a predetermined difference, the previous decision may be canceled. Specifically, rather than setting the number of decision iterations n in Step S29 in Fig. 6 to 1, it would be acceptable instead to start a timer T, and make a decision in Step S39 as to whether timer T has exceeded time interval T1. Timer T may be reset during initialization, or in Step S25.

### Symbol Key

- 10: internal shift hub
- 12: generator hub
- 25: shift control portion
- 25a: decision portion
- 25b: cancellation portion
- 25c: first control portion
- 25d: second control portion
- 26: operation position sensor
- 29: shift motor
- 30: memory portion
- 30a: threshold value setting portion

## Claims

1. A bicycle shift controller (9) for shift control of a bicycle shifter having a plurality of gear speeds, and able to be upshifted or downshifted by an actuator (29) depending on a sensed riding condition, said bicycle shift controller (9) comprising:
a threshold value setting portion (30a) for setting an upshift threshold value and downshift threshold value for said sensed riding condition depending on said plurality of gear speeds;
a decision portion (25a) for making subsequent decisions once a sensor result of said riding condition exceeds said upshift threshold value for the current gear speed, whether a plurality of subsequent riding condition sensor results also exceed said upshift threshold value;
a cancellation portion (25b) for canceling a previous decision, in the event that, of two sensor results sensed in succession during decisions by said decision portion (25a), the latter sensor result changes by a predetermined value or greater toward the upshift end from the former sensor result; and
a first control portion (25c) for controlling said actuator (29) so as to shift gear speed toward the high speed end, in the event that said decision portion has made the decision that all subsequent sensor results exceed said upshift threshold value, **characterized in that** the cancellation portion (25b) cancels the previous decision of the decision portion (25a), in the event that, of two sensor results sensed in succession during decisions by said decision portion (25a), the latter sensor result changes from the former sensor result during said decisions by a predetermined value (SA) or greater toward the upshift end.

2. A bicycle shift controller (9) according to claim 1 wherein said decision portion (25a) decides whether said upshift threshold value is exceeded a predetermined successive number of times.

3. A bicycle shift controller (9) according to claim 1 wherein said decision portion (25a) decides whether said upshift threshold value is exceeded over a predetermined continuous time interval.

4. A bicycle shift controller (9) according to any of claims 1 to 3 further comprising a second control portion (25d) for controlling said actuator (29) so as to immediately shift gear speed towards the low speed end, in the event that said riding condition sensor results exceed the downshift threshold value for current gear speed.

5. A bicycle shift controller (9) according to any of claims 1 to 4 wherein said sensed riding condition is bicycle velocity.

6. A bicycle shift controller according to claim 5 wherein said velocity is sensed a plurality of times in the course of one rotation of a wheel (6).

7. A bicycle shift controller according to claim 6 wherein said velocity is sensed by means of output from an alternating current generator (12) that rotates in tandem with said wheel (6).

8. A bicycle shift controller according to any of claims 1 to 4 wherein said sensed riding condition is the rotation speed of the crank (18) of said bicycle.

9. A bicycle shift controller according to any of claims 1 to 8 wherein said actuator (29) is an electrically operated component disposed on said bicycle shifter and operated by electricity; and said first control portion (25c) electrically controls said actuator (29).

## Patentansprüche

1. Fahrradschaltsteuervorrichtung (9) zur Schaltsteuerung einer Fahrradschalteinrichtung, die eine Mehrzahl von Gangstufen aufweist, und fähig ist, durch eine Betätigungseinrichtung (29) in Abhängigkeit von einem abgetasteten Fahrtzustand hochgeschaltet oder heruntergeschaltet zu werden, wobei die Fahrradschaltsteuereinrichtung (9) aufweist:
ein Schwellenwert-Einstellglied (30a), um einen Hochschalt-Schwellenwert und einen Herunterschalt-Schwellenwert für den abgetasteten Fahrtzustand in Abhängigkeit von der Mehrzahl von Gangstufen einzustellen;
ein Entscheidungsglied (25a), welches anschließend entscheidet, sobald ein Abtastergebnis des Fahrtzustands den Hochschalt-Schwellenwert für die aktuelle Gangstufe überschreitet, ob eine Mehrzahl von anschließenden Fahrtzustand-Abtastergebnissen den Hochschalt-Schwellenwert ebenfalls überschreiten;
ein Rücknahmeglied (25b), welches eine vorhergehende Entscheidung zurücknimmt, in dem Fall, dass, wenn von zwei Abtastergebnissen, die während Entscheidungen durch das Entscheidungsglied (25a) aufeinanderfolgend abgetastet wurden, sich das letztere Abtastergebnis um einen vorbestimmten Wert oder mehr zum Hochschalt-Ende hin ausgehend vom vorhergehenden Abtastergebnis ändert; und
ein erstes Steuerglied (25c), welches die Betätigungseinrichtung (29) so steuert, dass eine Gangstufe zum höheren Gangende hin geschaltet wird, in dem Fall, dass das Entscheidungsglied die Entscheidung vorgenommen hat, dass alle Abtastergebnisse den Hochschalt-Schwellenwert überschreiten, **dadurch gekennzeichnet, dass** das Rücknahmeglied (25b) die vorhergehende Entscheidung des Entscheidungsgliedes (25a) zurücknimmt, in dem Fall, dass, von zwei Abtastergebnissen, die während Entscheidungen durch das Entscheidungsglied (25a) aufeinanderfolgend abgetastet wurden, sich das letztere Abtastergebnis von dem vorhergehenden Abtastergebnis während den Entscheidungen um einen vorbestimmten Wert (SA) oder einen größeren Wert zum Hochschalt-Ende hin ändert.

2. Fahrradschaltsteuervorrichtung (9) nach Anspruch 1, bei der das Entscheidungsglied (25a) entscheidet, ob der Hochschalt-Schwellenwert eine vorbestimmte aufeinanderfolgende Anzahl von Malen überschritten wird.

3. Fahrradschaltsteuervorrichtung (9) nach Anspruch 1, bei der das Entscheidungsglied (25a) entscheidet, ob der Hochschalt-Schwellenwert über ein vorbestimmtes zusammenhängendes Zeitintervall hinweg überschritten wird.

4. Fahrradschaltsteuervorrichtung (9) nach einem der Ansprüche 1 bis 3, welche weiter ein zweites Steuerglied (25d) aufweist, um die Betätigungseinrichtung (29) so zu steuern, dass Gangstufen zum niedrigeren Gangstufenende hin unmittelbar geschaltet werden, in dem Fall, dass die Fahrtzustand-Abtastergebnisse den Herunterschalt-Schwellenwert für eine aktuelle Gangstufe überschreiten.

5. Fahrradschaltsteuervorrichtung (9) nach einem der Ansprüche 1 bis 4, bei welcher der der abgetastete Fahrtzustand die Fahrradgeschwindigkeit ist.

6. Fahrradschaltsteuervorrichtung nach Anspruch 5, bei welcher die Geschwindigkeit im Verlauf einer einzigen Umdrehung eines Laufrades (6) mehrmals abgetastet wird.

7. Fahrradschaltsteuervorrichtung nach Anspruch 6, bei welcher die Geschwindigkeit mittels einer Ausgabegröße eines Wechselstromgenerators (12) abgetastet wird, der zusammen mit dem Laufrad (6) rotiert.

8. Fahrradschaltsteuervorrichtung nach einem der Ansprüche 1 bis 4, bei welcher der abgetastete Fahrtzustand die Drehzahl der Kurbel (18) des Fahrrades ist.

9. Fahrradschaltsteuervorrichtung nach einem der Ansprüche 1 bis 8, bei welcher die Betätigungseinrichtung (29) ein elektrisch betriebenes Bauelement ist, das an der Fahrradschalteinrichtung angeordnet ist und mittels Elektrizität betrieben wird; und das erste Steuerglied (25c) die Betätigungseinrichtung (29) elektrisch steuert.

## Revendications

1. Contrôleur de changement de vitesse pour bicyclette (9) pour le contrôle du changement de vitesse d'un dispositif de changement de vitesse pour bicyclette ayant une pluralité de vitesses, et pouvant être passé à un braquet supérieur ou à un braquet inférieur par un actionneur (29) selon une condition de conduite détectée, ledit contrôleur de changement de vitesse pour bicyclette (9) comprenant :
une partie de fixation de valeur de seuil (30a) pour fixer une valeur de seuil de passage à un braquet supérieur et une valeur de seuil de passage à un braquet inférieur pour ladite condition de conduite détectée selon ladite pluralité de vitesses ;
une partie de décision (25a) pour prendre des décisions successives une fois qu'un résultat d'un capteur de ladite condition de conduite dépasse ladite valeur de seuil de passage à un braquet supérieur pour la vitesse actuelle, si une pluralité de résultats successifs du capteur de condition de conduite dépasse également ladite valeur de seuil de passage à un braquet supérieur ;
une partie d'annulation (25b) pour annuler une décision précédente, dans le cas où parmi deux résultats de capteur détectés en succession pendant les décisions par ladite partie de décision (25a), le dernier résultat de capteur change par une valeur prédéterminée ou plus en direction de l'extrémité de passage au braquet supérieur à partir du résultat de capteur précédent ; et
une première partie de contrôle (25c) pour contrôler ledit actionneur (29) de façon à changer de vitesse vers l'extrémité de vitesse supérieure, au cas où ladite partie de décision a pris la décision que tous les résultats de capteur successifs dépassent ladite valeur de seuil de passage au braquet supérieur,
**caractérisé en ce que** la partie d'annulation (25b) annule la décision précédente de la partie de décision (25a), dans le cas où parmi deux résultats de capteur détectés en succession pendant les décisions par ladite partie de décision (25a), le dernier résultat de capteur change par rapport au résultat de capteur précédent pendant lesdites décisions par une valeur prédéterminée (SA) ou plus en direction de l'extrémité de passage au braquet supérieur.

2. Contrôleur de changement de vitesse pour bicyclette (9) selon la revendication 1, dans lequel ladite partie de décision (25a) décide si ladite valeur de seuil de passage au braquet supérieur est dépassée un nombre de fois successif prédéterminé.

3. Contrôleur de changement de vitesse pour bicyclette (9) selon la revendication 1, dans lequel ladite partie de décision (25a) décide si ladite valeur de seuil de passage au braquet supérieur est dépassée sur un intervalle temporel continu prédéterminé.

4. Contrôleur de changement de vitesse pour bicyclette (9) selon l'une quelconque des revendications 1 à 3, comprenant en outre une seconde partie de contrôle (25d) pour contrôler ledit actionneur (29) de façon à changer immédiatement de vitesse vers l'extrémité de vitesse réduite, dans le cas où lesdits résultats du capteur de condition de conduite dépassent la valeur de seuil de passage au braquet inférieur pour la vitesse courante.

5. Contrôleur de changement de vitesse pour bicyclette (9) selon l'une quelconque des revendications 1 à 4, dans lequel ladite condition de conduite détectée est la vitesse de la bicyclette.

6. Contrôleur de changement de vitesse pour bicyclette selon la revendication 5, dans lequel ladite vitesse est détectée une pluralité de fois au cours d'une rotation d'une roue (6).

7. Contrôleur de changement de vitesse pour bicyclette selon la revendication 6, dans lequel ladite vitesse est détectée au moyen de la sortie d'un générateur de courant alternatif (12) qui tourné en tandem avec ladite roue (6).

8. Contrôleur de changement de vitesse pour bicyclette selon l'une quelconque des revendications 1 à 4, dans lequel ladite condition de conduite détectée est la vitesse de rotation de la manivelle (18) de ladite bicyclette.

9. Contrôleur de changement de vitesse pour bicyclette selon l'une quelconque des revendications 1 à 8, dans lequel ledit actionneur (29) est un composant à fonctionnement électrique disposé sur ledit dispositif de changement de vitesse pour bicyclette et fonctionnant à l'électricité ; et ladite première partie de contrôle (25c) contrôle électriquement ledit actionneur (29).
